# DEMANDE DE BREVET EUROPEEN

(11) **EP 4 840 695 A1**
(43) Date de publication de la demande: **18.11.2026**
(21) Numéro de dépôt: 26176309.8
(22) Date de dépôt: 04.05.2026
(51) Int. Cl.: B60N 2/75, B60N 3/10

(54) **CONSOLE DE RANGEMENT POUR VÉHICULE AUTOMOBILE INTÉGRANT UN SYSTÈME DE MAINTIEN D'OBJETS ESCAMOTABLES**

(30) Priorité: 14.05.2025 FR 2505132
(71) Demandeur: Eurostyle Systems Tech Center France, 36000 Châteauroux (FR)
(72) Inventeur: PHILIPPE, Jérôme, 36250 NIHERNE (FR)
(74) Mandataire: Weinstein Services & Conseils

(57) **Abrégé**

L'invention porte principalement sur une console de rangement pour véhicule automobile qui présente une partie de support fixe (2) délimitant un espace de rangement, et un accoudoir (6) qui est monté rotatif depuis une position fermée jusqu'à une position ouverte rendant l'espace de rangement accessible, et est essentiellement caractérisée en ce que l'accoudoir (6) comporte un système de maintien d'objets escamotable (10) qui coulisse entre une position rangée de blocage dans l'accoudoir (6) et une position déployée dans laquelle au moins la partie avant (12) du système de maintien d'objets (10) fait saillie de la partie d'extrémité avant de l'accoudoir (6), et en ce que ladite console (1) comporte des moyens de verrouillage de l'accoudoir à la partie de support (2) et des moyens de libération des moyens de verrouillage de l'accoudoir (6) qui sont activés lorsque le système de maintien d'objets (10) est dans sa position rangée de blocage.

## Description

### DOMAINE TECHNIQUE DE L'INVENTION

L'invention concerne de façon générale le domaine de l'aménagement intérieur de l'habitacle d'un véhicule automobile.

L'invention concerne plus particulièrement une console de rangement disposée dans l'habitacle d'un véhicule automobile et pourvue d'un couvercle et d'un système de maintien d'objets escamotable, par exemple un porte-gobelet.

### ARRIERE-PLAN TECHNOLOGIQUE DE L'INVENTION

La console centrale d'un véhicule, en particulier d'un véhicule automobile, constitue la partie centrale et avant de l'habitacle de ce véhicule. Elle s'étend entre les deux sièges avant du véhicule au-dessus du tunnel central du plancher.

Une console centrale comprend généralement dans sa partie avant rejoignant la planche de bord, un ou plusieurs espaces de rangement aptes à recevoir toutes sortes d'objets ou accessoires accessibles par les passagers avant.

A ce titre, une console connue présente une partie de support fixe qui est solidaire du plancher du véhicule et qui comporte notamment deux parois longitudinales opposées délimitant un ou plusieurs espaces creux de rangement. La console comporte en outre un accoudoir qui s'étend longitudinalement entre une partie d'extrémité avant et une partie arrière au niveau de laquelle l'accoudoir est monté rotatif relativement à ladite partie de support depuis une position fermée recouvrant le ou les espaces de rangement jusqu'à une position ouverte rendant le ou les espaces de rangement accessibles par les occupants du véhicule.

Le maintien de gobelets requiert un agencement particulier nécessitant des moyens de tenue fixe du gobelet en position verticale afin d'éviter que le liquide qu'il contient ne se renverse dans l'habitacle.

C'est pourquoi, il est connu, notamment de la publication FR3066153, un système de deux porte-gobelets agencé au niveau de la partie avant d'une console montée coulissante dans l'habitacle. Bien que les portes-gobelets soient montés pivotants entre une position rangée dans la console et une position déployée faisant saille latéralement de la console, ces porte gobelets occupent une place dans la console au détriment de l'espace de rangement intérieur.

### RESUME DE L'INVENTION

Dans ce contexte, l'invention vise une console de véhicule automobile qui intègre un système de maintien d'objets, par exemple un porte-gobelets, sans empiéter sur l'espace de rangement intérieur de la console et tout en présentant à la fois un maintien fixe des objets dans une position donnée et une utilisation coordonnée de l'accès à l'espace de rangement.

A cet effet, la console de rangement de l'invention s'étend selon un axe longitudinal principal (XX'), présente une partie de support fixe (2) comportant deux parois longitudinales opposées (3a,3b) délimitant un espace creux de rangement (4), et comporte un accoudoir (6) s'étendant longitudinalement entre une partie d'extrémité avant et une partie arrière au niveau de laquelle ledit accoudoir (6) est monté rotatif relativement à ladite partie de support (2) depuis une position fermée recouvrant l'espace de rangement (4) jusqu'à une position ouverte rendant l'espace de rangement (4) accessible. La console est caractérisée en ce que l'accoudoir (6) comporte un système de maintien d'objets escamotable (10) qui coulisse parallèlement à l'axe principal (XX') de la console (1) entre une position rangée de blocage dans l'accoudoir (6) et une position déployée dans laquelle au moins la partie avant (12) du système de maintien d'objets (10) fait saillie de la partie d'extrémité avant de l'accoudoir (6), et en ce que ladite console (1) comporte des moyens de verrouillage de l'accoudoir (28b,28a ;30b) à la partie de support (2) de la console (1) et des moyens de libération (38b) des moyens de verrouillage (28b,28a ;30b) de l'accoudoir (6) qui sont activés lorsque le système de maintien d'objets (10) est dans sa position rangée de blocage dans l'accoudoir (6).

La console de rangement de l'invention peut également comporter les caractéristiques optionnelles suivantes considérées isolément ou selon toutes les combinaisons techniques possibles :
- les moyens de verrouillage (28b,28a ;30b) de l'accoudoir (6) à la partie de support (2) de la console (1) comprennent au moins une patte d'accroche (28a,28b) qui est solidaire de l'accoudoir (6) et engagée, en position de verrouillage, dans un évidemment de verrouillage (30b) ménagé sur la partie de support (2) de la console (1), la patte d'accroche (28b) étant montée rotative dans l'accoudoir (6) entre sa position de verrouillage engagée dans l'évidemment (30b) de la partie de support (2) de l'accoudoir (6), et une position désengagée de cet évidemment (30b), laquelle position désengagée autorise le pivotement de l'accoudoir (6) relativement à la partie de support (2) de la console (1), et les moyens de libération (38b) des moyens de verrouillage (28b,28a ;30b) de l'accoudoir (6) sont montés sur le système de maintien d'objets (10) et entraînent en pivotement la patte d'accroche (28b) jusqu'à sa position désengagée de l'évidemment (30b) lorsque ledit système de maintien d'objets (10) atteint sa position rangée de blocage dans l'accoudoir (6).
- la patte d'accroche (28b) est montée à proximité de l'une des deux parois longitudinales (3a,3b) de la partie de support (2), son axe de rotation (R) étant monté dans l'accoudoir (6), et présente une tête (32b) dotée d'une fiche (33b) faisant saillie transversalement vers la paroi longitudinale opposée (3b,3a) et une partie inférieure (34b) dotée d'un crochet (35b) qui est dirigé vers la paroi longitudinale de montage (3b), le crochet (35b) étant engagé, lorsque la patte d'accroche (28b) est en position de verrouillage, dans l'évidemment de verrouillage (30b) qui est ménagé sur la paroi interne (31b) de la dite paroi longitudinale (3b), et les moyens de libération (38b) des moyens de verrouillage (28b,28a ;30b) de l'accoudoir (6) comportent un organe d'entraînement (38b) solidaire du système de maintien d'objets (10) s'étendant vers la partie arrière de l'accoudoir (6) jusqu'à une partie d'extrémité (39b) dont la face supérieure est située à une hauteur autorisant le soulèvement de la fiche (33b) de la patte d'accroche (28b) lorsque l'organe d'entraînement (38b) s'engage sous la fiche (33b) à l'arrivée du système de maintien d'objets (10) dans sa position rangée dans l'accoudoir (6), le soulèvement de la fiche 33b() entraînant la patte d'accroche (28b) en pivotement vers sa position désengagée de l'évidemment (30b).
- l'extrémité libre de la partie d'extrémité (39b) de l'organe d'entraînement (38b) présente une rampe inclinée (40b) le long de laquelle la fiche (33b) coulisse lorsque le système de maintien d'objets (10) atteint sa position rangée de blocage dans l'accoudoir (6) jusqu'à ce que la patte d'accroche (28b) pivote dans sa position désengagée de l'évidemment (30b).
- la patte d'accroche (28/b) comprend des moyens de rappel (37b) dans sa position de verrouillage engagée dans l'évidemment (30b).
- la console comporte deux pattes d'accroche (28a,28b) se faisant face transversalement de part et d'autre de l'espace de rangement (4) de la partie de support (2) de l'accoudoir (6) et montée chacun à proximité d'une paroi longitudinale (3a,3b) de la partie de support (2), leur axe de rotation (R) étant monté dans l'accoudoir (6), chaque patte d'accroche (28a,28b) présentant une tête (32b) dotée d'une fiche (33b) faisant saillie transversalement vers la paroi longitudinale opposée (3b,3a) et une partie inférieure (34b) dotée d'un crochet (35b) dirigé vers la paroi longitudinale (3a,3b) de montage de la patte d'accroche concernée (28a,28b), le crochet (35b) étant engagée, lorsque la patte d'accroche concernée (28a,28b) est en position de verrouillage, dans un évidemment de verrouillage correspondant (30b) ménagé sur la paroi interne (31b) de la dite paroi longitudinale (3b), et en ce que deux organes d'entraînement (38b) chacun solidarisé au système de maintien d'objets (10) en s'étendant vers la partie arrière de l'accoudoir (6) jusqu'à une partie d'extrémité (39b) dont la face supérieure est située à une hauteur autorisant le soulèvement de la fiche (33b) de la patte d'accroche concernée (28a,28b) lorsque l'organe d'entraînement (38b) s'engage sous la fiche (33b) à l'arrivée du système de maintien d'objets (10) dans sa position rangée dans l'accoudoir (6), le soulèvement de chaque fiche (33b) entraînant concomitamment les pattes d'accroche (28a,28b) en pivotement vers leur position désengagée de l'évidemment correspondant (30b).
- l'accoudoir (6) comporte un couvercle (9) recouvrant le système de maintien d'objets (10) lorsque ce dernier est en position rangée dans l'accoudoir (6), le couvercle (9) comportant une face interne (44) dotée de deux bossages (42,43) espacés longitudinalement et qui coopèrent avec une patte souple (25) montée sur la face supérieure du système de maintien d'objets (10), le bossage (42) le plus proche de la partie arrière de l'accoudoir (6) comportant des moyens de retenus (42a) de la patte souple (25) vers l'avant lorsque ladite patte souple (25) est maintenue au niveau de la partie arrière du bossage (42), position dans laquelle le système de maintien d'objets (10) est en position rangée dans l'accoudoir (6), et le bossage le plus proche de la partie d'extrémité avant (43) de l'accoudoir (6) comportant des moyens de retenus (43a) de la patte souple (25) vers l'arrière lorsque ladite patte souple (25) est maintenue en niveau de la partie avant dudit bossage (43), position dans laquelle le système de maintien d'objets (10) est en position déployée de blocage.
- la partie avant (12) du système de maintien d'objets (10) qui fait saillie de la partie d'extrémité avant de l'accoudoir (6) lorsque le système de maintien d'objets (10) est dans sa position déployée comporte au moins un porte-gobelet (14).
- le porte-gobelet (14) comprend un évidement traversant (43) réalisé dans l'épaisseur de ladite partie avant (12) du système de maintien d'objets (10), et un bras articulé (48) entre une position rangée autorisant le coulissement du système de maintien d'objets (10) dans l'accoudoir (6) et une position déployée dans laquelle il forme fond (50) au moins partiel de réception d'un gobelet .

L'invention porte enfin sur un véhicule automobile comportant une console centrale qui est telle que la console précédemment exposée.

### BREVE DESCRIPTION DES FIGURES

D'autres caractéristiques et avantages de l'invention ressortiront à la lecture de la description qui suit, en référence aux figures annexées, qui illustrent :
[Fig. 1] La figure 1 est une représentation schématique en perspective de la console de l'invention lorsque l'accoudoir est en position fermée recouvrant l'espace de rangement intérieur de la console et le système de maintien d'objets est en position rangée de blocage dans l'accoudoir ;
[Fig. 2] La figure 2 est une représentation schématique en perspective de la console de l'invention lorsque l'accoudoir est en position ouverte rendant accessible l'espace de rangement intérieur de la console, le système de maintien d'objets étant en position rangée dans l'accoudoir ;
[Fig. 3] La figure 3 est une représentation schématique en perspective de la console de l'invention lorsque l'accoudoir est en position fermée et que le système de maintien d'objets est en position déployée, le porte-gobelets étant rendu accessible ;
[Fig. 4] La figure 4 est une représentation schématique en perspective de la console de l'invention lorsque l'accoudoir est en position fermée et que le système de maintien d'objets est en position débloqué entre sa position rangée dans l'accoudoir (figure 1) et sa position déployée (figure 3) ;
[Fig. 5] La figure 5 est une représentation schématique en perspective de la console de l'invention dans la même position que celle de la figure 4, le couvercle de l'accoudoir n'étant pas représenté ;
[Fig. 6] La figure 6 est une représentation schématique en perspective de la console de l'invention dans la même position que celle de la figure 1, le couvercle de l'accoudoir n'étant pas représenté ;

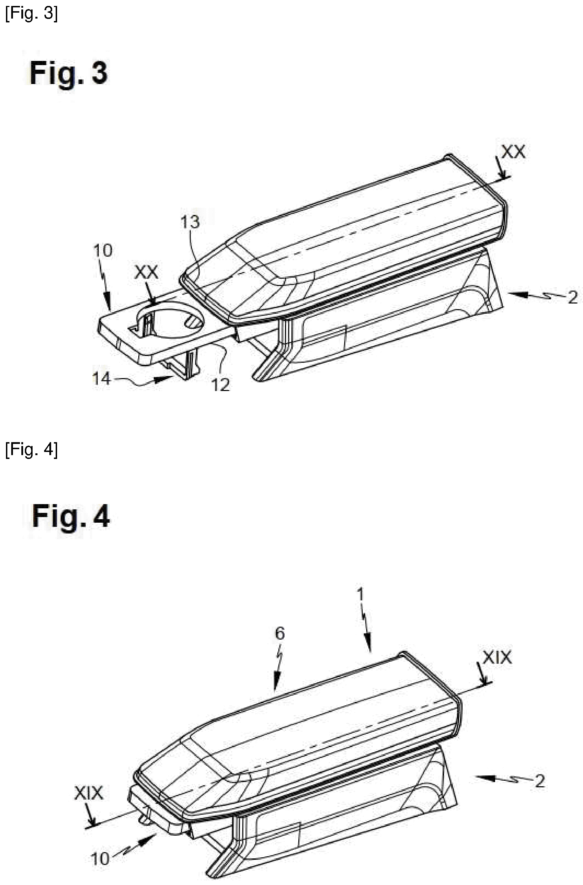

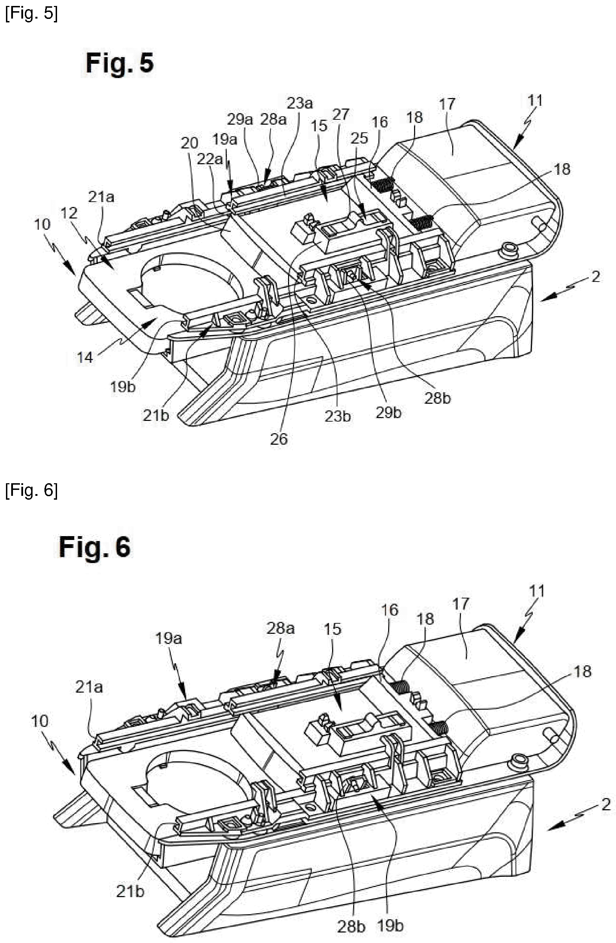

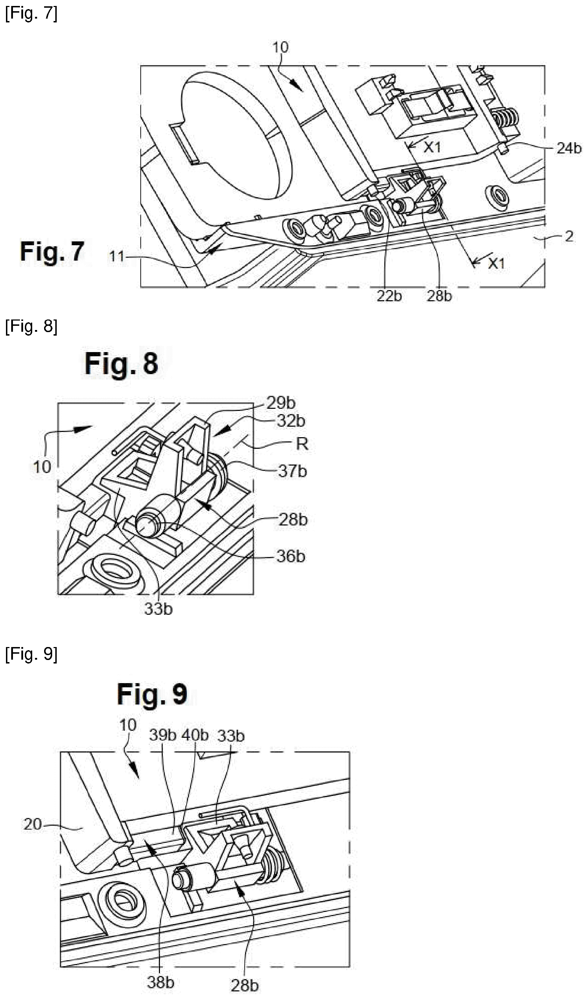

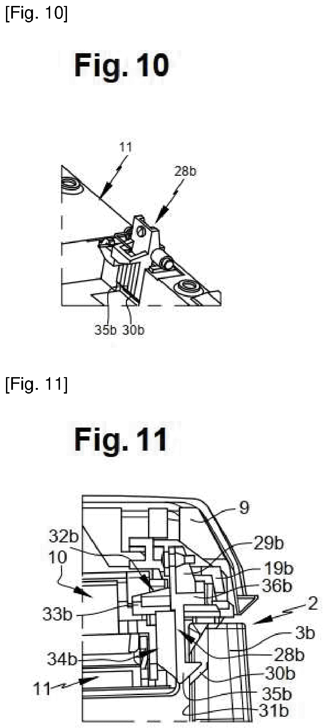

Les figures 7 à 11 sont des représentations schématiques d'une partie de la console de l'invention lorsque l'accoudoir est en position fermée et que le système de maintien d'objets est rangée dans l'accoudoir en position déverrouillée comme précédemment illustré sur les figures 4 et 5. [Fig. 7] La figure 7 est une représentation schématique en perspective d'un côté de la console de l'invention sur laquelle certaines pièces ne sont pas représentées, dont le couvercle de l'accoudoir, en mettant en évidence la position de verrouillage de la patte d'accroche qui empêche le pivotement de l'accoudoir relativement à la partie de support fixe de la console ; [Fig. 8] La figure 8 est une vue agrandie de la figure 7 illustrant la patte d'accroche dans sa position de verrouillage; [Fig. 9] La figure 9 est une vue arrière et en élévation de la patte d'accroche de la figure 7; [Fig. 10] La figure 10 est une autre vue de la patte d'accroche de la figure 7 prise depuis l'espace de rangement de la console, le système de maintien d'objets n'étant pas représenté sur cette figure, cette vue illustrant l'engagement de la patte d'accroche dans l'évidement réalisé sur la face interne d'une paroi longitudinale de la partie de support fixe de la console ; [Fig. 11] La figure 11 est une vue en coupe selon la ligne de coupe XI-XI de la figure 7, l'intégralité des pièces de l'accoudoir étant représentées sur cette figure ;

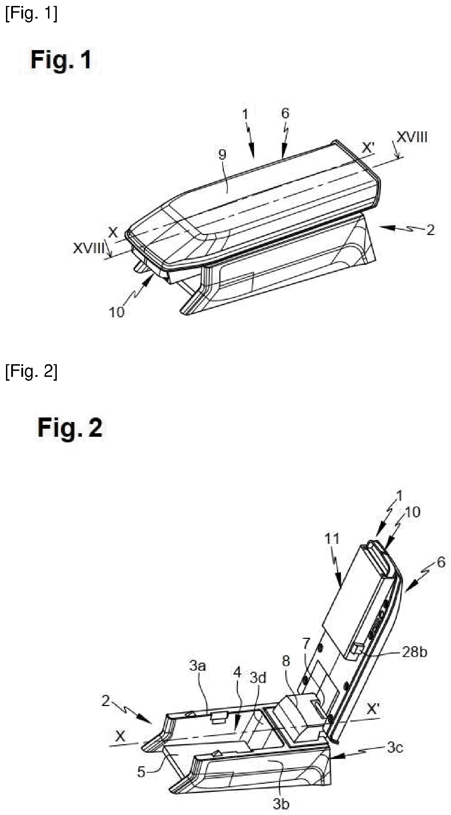

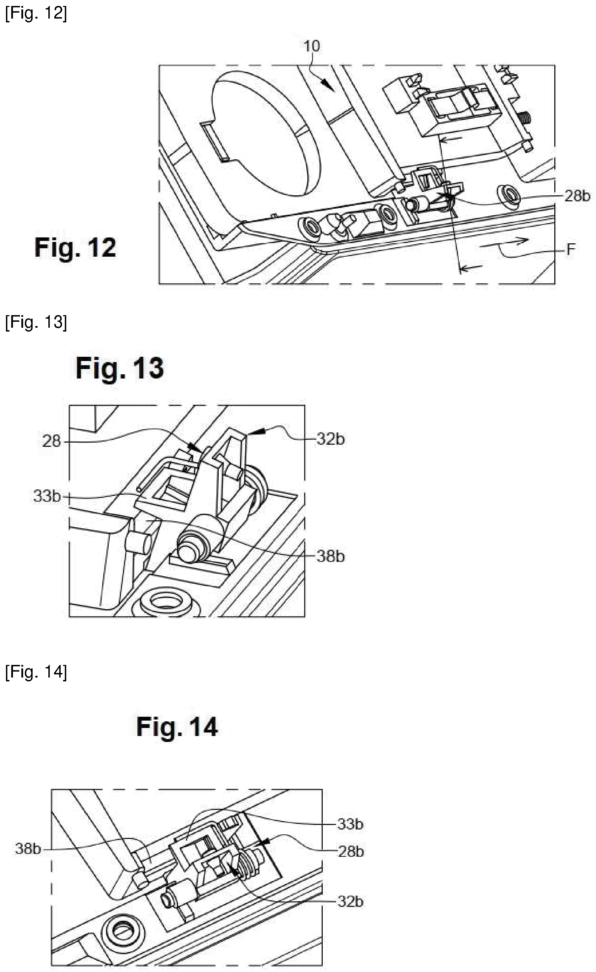

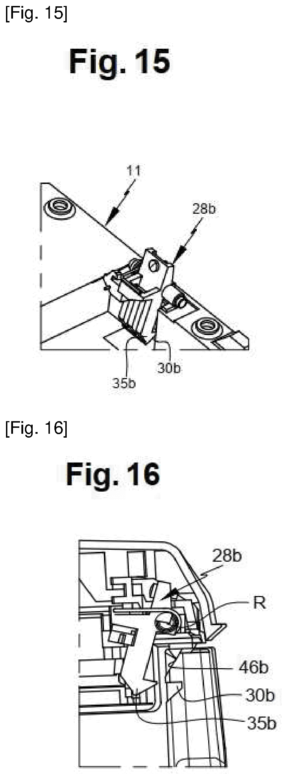

Les figures 12 à 16 sont des représentations schématiques d'une partie de la console de l'invention lorsque l'accoudoir est en position fermée et que le système de maintien d'objets est en position rangée dans l'accoudoir en position verrouillée comme précédemment illustré sur les figures 1 et 6. [Fig. 12] La figure 12 est une représentation schématique en perspective d'un côté de la console de l'invention sur laquelle certaines pièces ne sont pas représentées, dont le couvercle de l'accoudoir, en mettant en évidence la position désengagée de la patte d'accroche qui autorise le pivotement de l'accoudoir relativement à la partie de support fixe de la console ; [Fig. 13] La figure 13 est une vue agrandie de la figure 12 illustrant la patte d'accroche dans sa position désengagée de l'évidement ménagé sur la face interne de la paroi longitudinale de la partie de support fixe de la console, ainsi que l'organe d'entraînement solidaire du système de maintien d'objets qui est engagé sous la fiche de la patte d'accrochage en entraînant en pivotement de la patte d'accroche dans sa position désengagée; [Fig. 14] La figure 14 est une vue arrière et en élévation de la patte d'accroche de la figure 12; [Fig. 15] La figure 15 est une autre vue de la patte d'accroche de la figure 12 prise depuis l'espace de rangement de la console, le système de maintien d'objets n'étant pas représenté sur cette figure, cette vue illustrant le désengagement de la patte d'accroche de l'évidement réalisé sur la face interne d'un paroi longitudinale de la partie de support fixe de la console ; [Fig. 16] La figure 16 est une vue en coupe selon la ligne de coupe XVI-XVI de la figure 12, l'intégralité des pièces de l'accoudoir étant représentées sur cette figure ;
[Fig. 17] La figure 17 est une représentation schématique en perspective de dessus en transparence du couvercle de l'accoudoir de la console de l'invention ;
[Fig. 18] La figure 18 est une vue en coupe d'une partie de la console de l'invention dans la position représentée sur la figure 1 selon la ligne de coupe XVIII-XVIII et illustrant la coopération entre la patte souple du système de maintien d'objets escamotable et le bossage le plus proche de la partie arrière de l'accoudoir du couvercle assurant le maintien de cette patte souple à l'arrière du bossage et ainsi le maintien du système de maintien d'objets en position rangée dans l'accoudoir ;
[Fig. 19] La figure 19 est une vue en coupe d'une partie de la console de l'invention dans la position représentée sur la figure 1 selon la ligne de coupe XIX-XIX et illustrant la patte souple du système de maintien d'objets escamotable situé à l'avant du bossage le plus proche de la partie arrière de l'accoudoir du couvercle, position autorisant librement le coulissement du système de maintien d'objets dans l'accoudoir ;
[Fig. 20] La figure 20 est une vue en coupe d'une partie de la console de l'invention dans la position représentée sur la figure 3 selon la ligne de coupe XX-XX et illustrant la coopération entre la patte souple du système de maintien d'objets escamotable et le bossage le plus proche de la partie avant de l'accoudoir du couvercle assurant le maintien de cette patte souple à l'avant du bossage et ainsi le maintien du système de maintien d'objets en position déployée de blocage;
[Fig. 21] La figure 21 est une représentation schématique en perspective de dessous et depuis l'espace de rangement de la console d'une partie du système de maintien d'objets et de la patte d'accroche dans une première position intermédiaire de rabattement de l'accoudoir sur la partie de support fixe de la console dans laquelle position la patte d'accrochage transite en contact glissant dans un second évidement vers l'évidement de verrouillage ;
[Fig. 22] La figure 22 est une représentation schématique en perspective de dessous et depuis l'espace de rangement de la console d'une partie du système de maintien d'objets et de la patte d'accroche dans une seconde position intermédiaire de rabattement de l'accoudoir sur la partie de support fixe de la console dans laquelle position la patte d'accrochage s'engage dans l'évidement de verrouillage ;
[Fig. 23] La figure 23 est une représentation schématique en perspective d'une première variante de réalisation du porte-gobelet du système de maintien d'objet en position déployée, lequel porte-gobelet est illustré en position d'utilisation dans lequel le bras articulé est en position déployée de réception d'un gobelet ;
[Fig. 24] La figure 24 est une représentation schématique en perspective de dessous de la première variante de réalisation du porte-gobelet du système de maintien d'objet en position déployée, lequel porte-gobelet est illustré en position rangée ;
[Fig. 25] La figure 25 est une vue agrandie de la figure 24 selon la flèche XXV ;
[Fig. 26] La figure 26 est une représentation schématique en perspective de la console de l'invention lorsque l'accoudoir est en position fermée et que le système de maintien d'objets est en position déployée, le porte-gobelets selon une seconde variante de réalisation étant rendu accessible.

### DESCRIPTION DETAILLEE

Il est tout d'abord précisé que sur les figures, les mêmes références désignent les mêmes éléments quelle que soit la figure sur laquelle elles apparaissent et quelle que soit la forme de représentation de ces éléments. De même, si des éléments ne sont pas spécifiquement référencés sur l'une des figures, leurs références peuvent être aisément retrouvées en se reportant à une autre figure.

Il est également précisé que les figures représentent des variantes de l'invention mais qu'il peut exister d'autres modes de réalisation qui répondent à la définition de l'invention.

Il est enfin précisé que les termes « arrière », « avant », « haut », « supérieur », « bas » et « inférieur » dans la description se réfère à un positionnement dans l'habitacle d'un véhicule. Le terme « avant » signifie donc vers l'avant du véhicule, le terme « arrière » signifie vers l'arrière du véhicule, les termes « haut » et « supérieur » signifient vers le plafond de l'habitacle du véhicule, et les termes « bas » et « inférieur » signifient vers le plancher du véhicule.

La structure générale et les principales fonctionnalités de la console de l'invention sont décrites en référence aux figures 1 à 6.

La console de l'invention 1 s'étend selon un axe principal longitudinal XX' et comprend une partie de support fixe 2 qui est solidaire du plancher du véhicule non représenté et qui comporte deux parois longitudinales opposées 3a,3b et une portion arrière 3c dotée d'une paroi interne 3d, les trois parois longitudinales opposées 3a,3b et arrière 3d délimitant un espace de rangement creux 4 sur le fond 5 duquel lequel divers objets peuvent être positionnés par les occupants du véhicule.

La console de l'invention 1 comprend un accoudoir 6 qui est monté rotatif relativement à la partie de support 2 autour d'un axe de rotation 7 perpendiculaire à l'axe principal de la console XX' et situé à l'arrière de la console 1 en étant monté solidaire sur une pièce d'appui 8 fixée sur la portion arrière 3c de la partie de support 2.

En position fermée (figure 1), l'accoudoir 6 s'étend longitudinalement sur toute la longueur de la partie de support 2 en faisant saillie longitudinalement au niveau de la partie avant de la partie de support 2 et en recouvrant l'espace de rangement 4, le rendant ainsi inaccessible. En position ouverte (figure 2), l'accoudoir s'étend sensiblement perpendiculairement à l'axe longitudinal XX' en découvrant l'espace de rangement 4 et en le rendant ainsi accessible aux occupants du véhicule.

L'accoudoir 6 comprend principalement un couvercle 9 qui s'étend longitudinalement sur toute la longueur de l'accoudoir 6 et dont la face supérieure forme surface d'appui pour les occupants du véhicule lorsque l'accoudoir 6 est en position fermée. L'accoudoir 6 comprend également un système de maintien d'objets escamotable 10 monté coulissant longitudinalement dans l'accoudoir 6 et plus particulièrement au sein d'une pièce de support à coulissement 11 qui est solidaire du couvercle 9 et qui s'étend longitudinalement sur toute la longueur du couvercle 9 de l'accoudoir 6 . Comme illustré sur les figures 1 à 4, le système de maintien d'objets 10 présente trois positions principales dans l'accoudoir.

En premier lieu et en référence aux figures 1 et 2, le système de maintien d'objets 10 peut être dans une position rangée en blocage dans l'accoudoir 9, laquelle position rangée en blocage est la seule position qui autorise le pivotement de l'accoudoir 6 relativement à la partie de support 2 par des moyens de verrouillage et de déverrouillage contrôlés qui seront décrits plus loin.

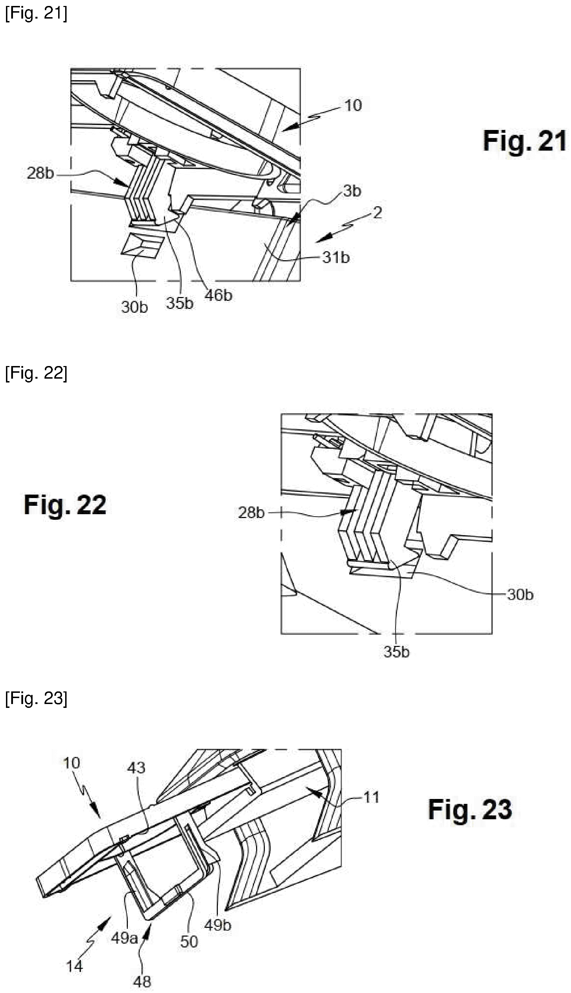

En référence à la figure 3, le système de maintien d'objets 10 peut être dans une position déployée dans laquelle sa partie avant 12 fait saillie longitudinalement de la partie d'extrémité avant 13 de l'accoudoir 6 en présentant par exemple un porte gobelet 14 qui sera décrit plus en détail aux figures 23 à 25. Dans cette position déployée, l'accoudoir 6 ne peut pas être pivoté et est maintenu fixe dans sa position fermée ce qui permet d'éviter le basculement du porte-gobelets 14 lorsque celui-ci supporte un gobelet rempli de liquide.

En référence à la figure 4, le système de maintien d'objets 10 peut être dans une position intermédiaire dans laquelle il se trouve rangé dans l'accoudoir 9 sans être bloqué. Dans cette position également, il est impossible de faire pivoter l'accoudoir 6.

On se réfère aux figures 5 et 6 pour décrire plus précisément l'agencement du système de maintien d'objets 10 dans l'accoudoir 6. Sur ces deux figures, le couvercle de l'accoudoir 6 n'est pas représenté pour une meilleure visibilité des autres pièces.

Le système de maintien d'objets 10 comporte une partie avant plane 12 déjà évoquée et présentant un porte-gobelets 14, ici dans sa position rangée, pour permettre le coulissement du système de maintien d'objets 10 dans l'accoudoir 6. La partie avant 12 se prolonge vers l'arrière, via une paroi transversale de jonction 20, par une partie arrière 15 qui est surélevée par rapport par rapport à la partie avant 12 et qui se prolonge elle-même vers l'arrière par une partie d'extrémité arrière surélevée 16. La partie d'extrémité arrière 16 fait face longitudinalement à un bloc arrière creux 17 de la pièce de support à coulissement 11 qui épouse la forme de la pièce d'appui 8 (figure 2). Deux ressorts 18 sont montés entre la partie d'extrémité arrière 16 du système de maintien d'objets 10 et le bloc arrière 17 de la pièce de support à coulissement 11, ces ressorts 18 étant état de compression (figure 6) lorsque le système de maintien d'objets 10 est dans sa position rangée dans l'accoudoir 6 et verrouillée.

L'accoudoir 6 présente également deux pièces glissières 19a,19b solidaires de la pièce de support à coulissement 11 et du couvercle 9 non représenté qui s'étendent longitudinalement sur la pièce de support à coulissement 11 de part et d'autre du système de maintien d'objets 10.

Chaque pièce glissière 19a, 19b présente un rail inférieur 21a,21b qui s'étend depuis l'avant de la pièce de support à coulissement 11 jusqu'à approximativement la paroi transversale de jonction 20 du système de maintien d'objets 10 en position rangée de blocage (figure 6), de laquelle paroi transversale de jonction 20 émerge en partie supérieure et transversalement deux picots avant opposés 22a (figure 5), 22b (figure 7) qui s'engagent en coulissement dans les rails opposés inférieurs 21a,21b.

Chaque pièce glissière 19a, 19b présente un rail supérieur 23a,23b qui s'étend depuis le bloc arrière 17 de la pièce de support à coulissement 11 jusqu'à approximativement la paroi transversale de jonction 20 du système de maintien d'objets 10 en position rangée de blocage (figure 6). Deux picots arrière opposés non visibles sur les figures 5 et 6 mais dont l'un 24b est visible sur la figure 7, émergent transversalement depuis la partie d'extrémité arrière surélevée 16 et s'engagent en coulissement dans les rails opposés supérieurs 23a,23b.

La coopération des rails inférieurs 21a,21b et des picots avant 22a,22b, et des rails supérieurs 23a,23b et des picots arrière 24b permet de faire coulisser le système de maintien d'objet 10 dans l'accoudoir depuis sa position rangée dans l'accoudoir 6 jusqu'à sa position déployée de la figure 3. On peut prévoir optionnellement des butées au niveau des extrémités avant des rails 21a,21b ; 23a,23b pour empêcher le désengagement du système de maintien d'objets 10 en position déployée de l'accoudoir 6.

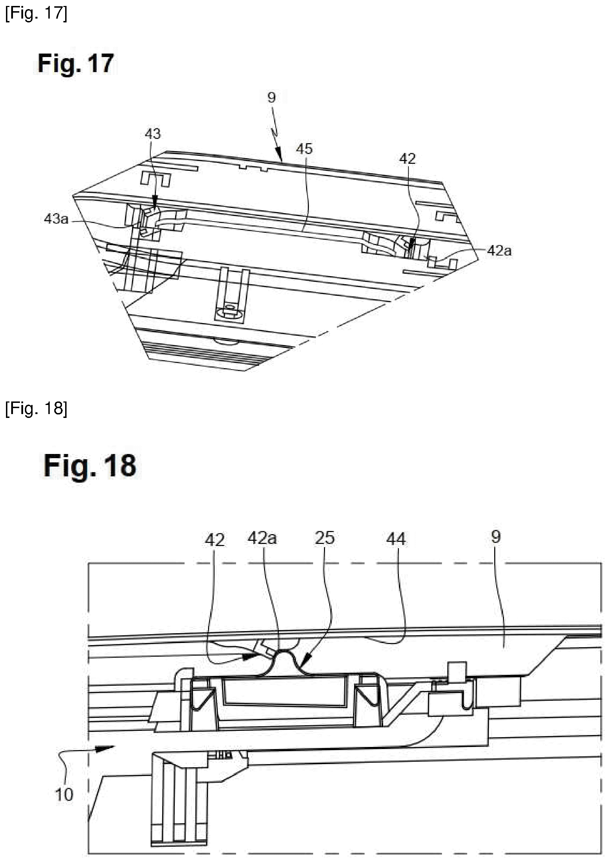

Toujours en référence aux figures 5 et 6, une patte souple 25 est montée sur un bloc 26 qui est agencé solidairement sur la face supérieure de la partie arrière 15 du système de maintien d'objets 10. La patte souple 25 se présente sous la forme d'une bande métallique qui s'étend longitudinalement en présentant un bossage 27 qui coopère avec deux bossages ménagés sur face interne du couvercle 9 de l'accoudoir 6 pour assurer le blocage de la position rangée et de la position déployée du système de maintien d'objets 10 comme il sera exposé en détail en référence aux figures 17 à 20.

Pour assurer le verrouillage de l'accoudoir 6 en position fermée lorsque le système de maintien d'objets 10 est déployée, et pour assurer le déverrouillage de l'accoudoir 6 autorisant son pivotement lorsque le système de maintien d'objets 10 est en position rangée de blocage, la console de l'invention 1 comporte deux pattes d'accroche opposées 28a,28b se faisant face transversalement de part et d'autre de l'espace de rangement de la partie de support 2 de la console, et dont seule la partie d'extrémité supérieure 29a,29b est visible sur les figures 5 et 6. Les moyens de verrouillage incluant les pattes d'accroche opposées 28a,28b ainsi que les moyens de libération de ces moyens de verrouillage sont détaillés ci-après en références aux figures 7 à 16, mais il peut être néanmoins observé que sur la figure 5, lorsque le système de maintien d'objet 10 est en position rangée non bloquée, les parties d'extrémités supérieures 29a,29b des pattes d'accroche 28a,28b sont sensiblement verticales, alors que lorsque le système de maintien d'objets 10 est en position rangée de blocage, ces parties d'extrémités supérieures ont pivoté, autorisant ainsi le pivotement de l'accoudoir 6.

On se réfère d'abord aux figures 7 à 11 pour décrire les moyens de verrouillage de l'accoudoir. Sur ces figures, seuls les moyens de verrouillage ménagés d'un côté de la console sont représentés, mais ces moyens de verrouillage sont, selon ce mode de réalisation non limitatif, également présents au niveau de l'autre côté de la console 1. Il peut être alternativement prévu une seule patte d'accroche ou plus de deux pattes d'accroche selon la sécurité de verrouillage visée.

Les moyens de verrouillages ménagés sur un côté de la console 1 comprennent une patte d'accroche 28b qui coopère en engagement avec un évidemment de verrouillage 30b réalisé sur la face interne 31b de la paroi longitudinale 3b de la partie de support 2 de la console 1.

La patte d'accroche 28b est montée à proximité de la paroi longitudinale 3b et comprend une tête 32b comprenant la partie d'extrémité supérieure 29b déjà mentionnée en référence aux figures 5 et 6, ainsi qu'une fiche 33b faisant saillie vers la paroi longitudinale opposée non visible sur ces figures. La patte d'accroche 28b comporte également une partie inférieure 34b dotée d'un crochet 35b dirigé vers la paroi longitudinale 3b à proximité de laquelle est montée la patte d'accroche 28b.

La patte d'accroche 28b est montée pivotante autour d'un axe de rotation R matérialisé par des picots de rotation 36b qui s'étendent parallèlement à l'axe principal XX' de la console 1 et qui sont montés dans la pièce glissière concernée 19b, laquelle n'est pas représentée sur les figures 7 à 10 pour la clarté de description de la pièce d'accroche 28b. L'axe de rotation 36b de la pièce d'accroche 28b est ainsi monté au droit de la paroi longitudinale 3b de la partie de support 2.

Dans sa position verrouillée représentée sur les figures 7 à 10, le crochet 35b de la pièce d'accroche 28b est engagé dans l'évidement de verrouillage 30b empêchant ainsi l'accoudoir 6 de pivoter relativement à la pièce support 3 puisque la pièce d'accroche 28b est solidaire de l'accoudoir 6 par son montage dans la pièce glissière 19b. La pièce d'accroche 28b est maintenue dans cette position de verrouillage par un ressort de rappel 37b monté autour d'un picot de rotation 36b.

Comme également visible sur ces figures, le système de maintien d'objets 10 comprend un organe d'entraînement 38b qui s'étend longitudinalement à l'arrière de sa paroi de jonction 20 jusqu'à une partie d'extrémité 39b terminée par une rampe inclinée 40b et qui présente une longueur telle que dans la position représentée sur les figures 7 à 10, c'est-à-dire une position dans laquelle le système de maintien d'objets 10 est rangé dans l'accoudoir 6 mais non bloqué, la partie d'extrémité 38b de l'organe d'entraînement 38b n'est pas en contact avec la patte d'accroche 28b, laquelle patte d'accroche 28b est uniquement sollicitée par le ressort de rappel 37b en position d'engagement dans l'évidemment de verrouillage 30b.

On se réfère à présent aux figures 12 à 16 pour décrire la position désengagée de la patte d'accroche 28b de l'évidemment 30b, ainsi que la coopération de l'organe d'entraînement 38b avec la tête 32b de la patte d'accroche 28b, l'organe d'entraînement 38b formant moyens de libération des moyens de verrouillage de l'accoudoir 6 dans sa position fermée.

Lorsque le système de maintien d'objets 10 est poussé vers l'arrière de l'accoudoir 6 selon la flèche F de la figure 12 depuis sa position rangée non bloquée des figures 7 à 11, la partie d'extrémité 39b de l'organe d'entraînement , dont la face inférieure est située à une hauteur supérieure à la hauteur de la face inférieure de la fiche 33b de la tête 32b de la patte d'accroche 28b dans sa position verrouillée, vient s'engager sous la fiche 33b en provoquant le pivotement de la patte d'accroche 28b autour de son axe de rotation R et le désengagement concomitant du crochet 35b de la patte d'accroche 28b de l'évidemment 30b, ce qui autorise l'ouverture par pivotement de l'accoudoir 6 relativement à la partie de support 2. La rampe inclinée 40b permet de faciliter l'engagement de l'organe d'entraînement 38b sous la fiche 33b et le basculement de la fiche 33b, et ainsi de la patte d'accroche 28b. C'est ainsi que dans cette position du système de maintien d'objets 10 en position rangée de blocage dans l'accoudoir, et uniquement dans cette position dans laquelle le porte-gobelets est assurément en position inactive dans sa position rangée dans l'accoudoir 6, que l'accoudoir peut basculer pour rendre accessible l'espace de rangement 4 de la console 1. La description qui a été faite de la patte d'accroche 28b et de son environnement assurant le verrouillage et déverrouillage contrôlé de l'accoudoir 6 s'applique à la patte d'accroche opposée 28a.

On se réfère à présent aux figures 17 à 20 pour décrire les moyens de maintien du système de maintien d'objets 10 dans ses positions respectivement rangée de blocage dans l'accoudoir 6 et déployée. La patte souple 25 ménagée sur le système de maintien d'objets 10 et plus précisément sur sa partie arrière surélevée 15 a déjà été décrite en référence aux figures 5 et 6. Cette patte souple 25 coopère avec deux bossages 42,43 ménagés sur la face interne 44 du couvercle 9 de l'accoudoir 6. Ces bossages 42,43 sont espacés longitudinalement, le premier bossage 42 étant disposé plus proche de la partie arrière de l'accoudoir 6 et le second bossage étant disposé plus proche de la partie avant de l'accoudoir 6. Chaque bossage 42,43 présente des moyens de retenus 42a,43a de la patte souple 25 dans la position considérée du système de maintien d'objets 10. Les moyens de retenus 42a du premier bossage 42 sont agencés du coté de la partie arrière de l'accoudoir 6 et les moyens de retenus 43a du second bossage 43 sont agencés du coté de la partie avant de l'accoudoir 6. Chaque moyen de retenu 42a,43a se présente sous la forme d'une languette saillante qui s'oppose respectivement au passage de la pate souple 25 vers l'avant de l'accoudoir lorsque la patte souple 25 est retenue par le premier bossage 42, et vers l'arrière de l'accoudoir 6 lorsque la patte souple 25 est retenue par le second bossage 43.

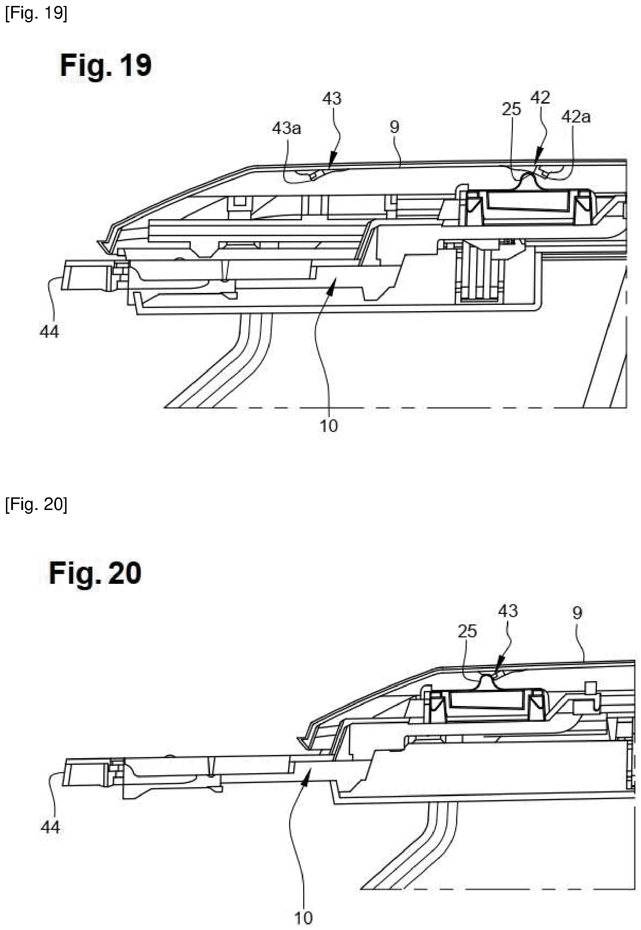

Ainsi, lorsque le système de maintien d'objet 10 est en position rangée et de blocage dans l'accoudoir (figure 18), la patte souple 25 est logée à l'arrière du premier bossage 42 et retenue dans cette position par les moyens de retenue 42a. Dans cette position, les ressorts 18 (figure 6) sont comprimés. L'exercice par l'occupant du véhicule d'un effort manuel de traction par préhension de la partie avant 44 du système de maintien d'objet 10 qui est accessible à l'occupant du véhicule lorsque le système de maintien d'objet 10 est dans cette position, confère un élan d'avancement vers l'avant du système de maintien d'objet 10 qui permet à la patte souple 25 de passer de l'autre coté du premier bossage 42 comme illustré sur la figure 19.

Le système de maintien d'objets 10 se trouve alors dans sa position rangée dans l'accoudoir, mais non bloquée, correspondant aux figures 7 à 11, l'accoudoir étant alors verrouillé en position fermée. La préhension par l'occupant du véhicule de la partie avant 44 du système de maintien d'objets 10 permet de poursuivre sa course vers sa position déployée, la patte souple 25 glissant sur la face interne 44 du couvercle 9 qui peut prévoir à cet effet une rampe glissante 45.

Lorsque la patte souple 25 arrive au niveau du second bossage 43, l'effort de coulissement du système de maintien d'objets 10 permet à la patte souple 25 de passer du coté avant du bossage 43 et d'être maintenue dans cette position par les moyens de retenus 43a (figure 20). Dans cette position, le système de maintien d'objets 10 est dans sa position déployée, le porte-gobelets étant alors à disposition d'utilisation.

Pour ranger le système de maintien d'objets 10 dans l'accoudoir, l'occupant du véhicule exerce un effort de poussée sur la partie avant 44 du système de maintien d'objets 10 qui permet à la patte souple 25 de passer le second bossage 43, puis le premier bossage 42 jusqu'à atteindre la position de la figure 18 dans laquelle le système de maintien d'objets 10 est dans sa position rangée de blocage dans l'accoudoir 6.

En référence aux figures 21 et 22, on décrit l'engagement par encliquetage de la patte d'accroche 28b dans l'évidemment de verrouillage 30b lorsque l'accoudoir 6 est refermé. A cet effet, il est prévu un second évidemment 46b, également ménagé sur la paroi interne 31b de la paroi longitudinale 3b de la partie de support 2, ce second évidemment 46b (voir également figure 16) étant situé juste au-dessus de l'évidemment de verrouillage 30b et constitué d'une rampe incliné qui permet au crochet 35b de la patte de verrouillage 28b de se positionner contre la face interne 31b de la paroi longitudinale 3b lorsque l'accoudoir 6 est proche de sa position de fermeture, puis de venir en glissement dans le second évidemment 46b jusqu'à l'évidemment de verrouillage 30b.

Les figures 23 à 25 illustrent une première variante de réalisation d'un porte-gobelets 14 comportant, en position déployée illustrée sur la figure 23, un évidemment traversant 47 réalisé dans l'épaisseur du système de maintien d'objets 10 et un bras articulé 48 en forme de U monté en rotation par l'extrémité supérieure de ses branches opposés 49a,49b sur le système de maintien d'objets 10 de part et d'autre de l'évidement traversant 47, la branche centrale 50 sensiblement horizontale formant fond partiel de réception d'un gobelet.

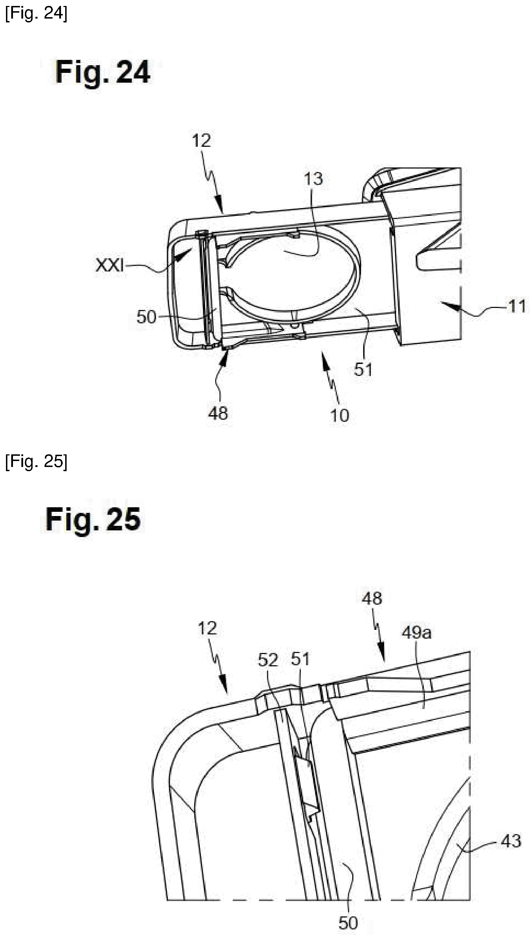

En position rangée (figure 24), le bras articulé 48 pivote vers l'avant du système de maintien d'objets 10 jusqu'à venir contre la face inférieure 51 de la partie avant 12 du système de maintien d'objets 10, la branche centrale 50 étant maintenue dans cette position par des moyens de retenus 51 ménagés sur une paroi transversale 52. Les pattes situées sur chacune des branches 49a,49b au niveau du pivot du bras articulé 48 permettent d'assurer le pivotement automatique en position rangée de ce bras articulé 48 par frottement de ces pattes sur la face interne de la pièce de support à coulissement 11 et contrainte simultanée de pivotement du bras articulé 48 lorsque le système de maintien d'objets 10 est poussé par l'occupant vers l'arrière de l'accoudoir.

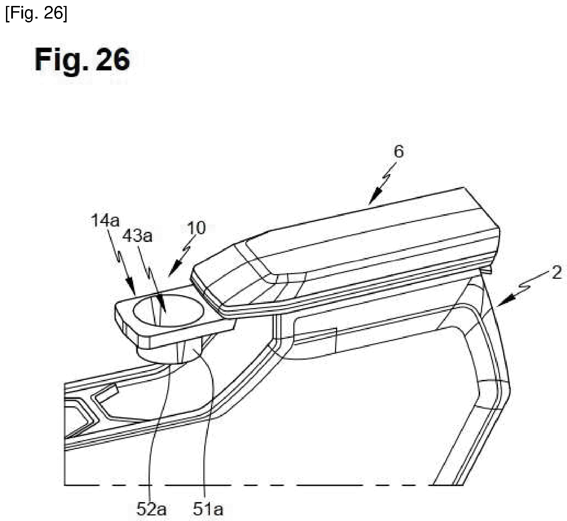

La figure 26 illustre une seconde variante de réalisation d'un porte-gobelets 14a qui comporte également un évidemment traversant 43a se prolongeant par des parois circulaires 51a et un fond plein 52a de réception d'un gobelet. Dans cette variante de réalisation, le porte-gobelet 14a n'adopte pas de position rangée et la hauteur de réception du système de maintien d'objets 10 par la pièce de support à coulissement 11 est adaptée à la hauteur du porte-gobelet 14a pour assurer le rangement du système de maintien d'objets 10 dans l'accoudoir 6. A cet effet, il pourra être prévu que la pièce de support à coulissement 11 soit dépourvue de fond.

## Revendications

1. Console de rangement pour véhicule automobile, laquelle console s'étend selon un axe longitudinal principal (XX'), présente une partie de support fixe (2) comportant deux parois longitudinales opposées (3a,3b) délimitant un espace creux de rangement (4), et comporte un accoudoir (6) s'étendant longitudinalement entre une partie d'extrémité avant et une partie arrière au niveau de laquelle ledit accoudoir (6) est monté rotatif relativement à ladite partie de support (2) depuis une position fermée recouvrant l'espace de rangement (4) jusqu'à une position ouverte rendant l'espace de rangement (4) accessible, **caractérisée en ce que** l'accoudoir (6) comporte un système de maintien d'objets escamotable (10) qui coulisse parallèlement à l'axe principal (XX') de la console (1) entre une position rangée de blocage dans l'accoudoir (6) et une position déployée dans laquelle au moins la partie avant (12) du système de maintien d'objets (10) fait saillie de la partie d'extrémité avant de l'accoudoir (6), et **en ce que** ladite console (1) comporte des moyens de verrouillage de l'accoudoir (28b,28a ;30b) à la partie de support (2) de la console (1) et des moyens de libération (38b) des moyens de verrouillage (28b,28a ;30b) de l'accoudoir (6) qui sont activés lorsque le système de maintien d'objets (10) est dans sa position rangée de blocage dans l'accoudoir (6).

2. Console selon la revendication 1, **caractérisée en ce que** les moyens de verrouillage (28b,28a ;30b) de l'accoudoir (6) à la partie de support (2) de la console (1) comprennent au moins une patte d'accroche (28a,28b) qui est solidaire de l'accoudoir (6) et engagée, en position de verrouillage, dans un évidemment de verrouillage (30b) ménagé sur la partie de support (2) de la console (1), la patte d'accroche (28b) étant montée rotative dans l'accoudoir (6) entre sa position de verrouillage engagée dans l'évidemment (30b) de la partie de support (2) de l'accoudoir (6), et une position désengagée de cet évidemment (30b), laquelle position désengagée autorise le pivotement de l'accoudoir (6) relativement à la partie de support (2) de la console (1), et **en ce que** les moyens de libération (38b) des moyens de verrouillage (28b,28a ;30b) de l'accoudoir (6) sont montés sur le système de maintien d'objets (10) et entraînent en pivotement la patte d'accroche (28b) jusqu'à sa position désengagée de l'évidemment (30b) lorsque ledit système de maintien d'objets (10) atteint sa position rangée de blocage dans l'accoudoir (6).

3. Console selon la revendication précédente, **caractérisé en ce que** la patte d'accroche (28b) est montée à proximité de l'une des deux parois longitudinales (3a,3b) de la partie de support (2), son axe de rotation (R) étant monté dans l'accoudoir (6), et présente une tête (32b) dotée d'une fiche (33b) faisant saillie transversalement vers la paroi longitudinale opposée (3b,3a) et une partie inférieure (34b) dotée d'un crochet (35b) qui est dirigé vers la paroi longitudinale de montage (3b), le crochet (35b) étant engagé, lorsque la patte d'accroche (28b) est en position de verrouillage, dans l'évidemment de verrouillage (30b) qui est ménagé sur la paroi interne (31b) de la dite paroi longitudinale (3b), et **en ce que** les moyens de libération (38b) des moyens de verrouillage (28b,28a ;30b) de l'accoudoir (6) comportent un organe d'entraînement (38b) solidaire du système de maintien d'objets (10) s'étendant vers la partie arrière de l'accoudoir (6) jusqu'à une partie d'extrémité (39b) dont la face supérieure est située à une hauteur autorisant le soulèvement de la fiche (33b) de la patte d'accroche (28b) lorsque l'organe d'entraînement (38b) s'engage sous la fiche (33b) à l'arrivée du système de maintien d'objets (10) dans sa position rangée dans l'accoudoir (6), le soulèvement de la fiche 33b() entraînant la patte d'accroche (28b) en pivotement vers sa position désengagée de l'évidemment (30b).

4. Console selon la revendication précédente, **caractérisée en ce que** l'extrémité libre de la partie d'extrémité (39b) de l'organe d'entraînement (38b) présente une rampe inclinée (40b) le long de laquelle la fiche (33b) coulisse lorsque le système de maintien d'objets (10) atteint sa position rangée de blocage dans l'accoudoir (6) jusqu'à ce que la patte d'accroche (28b) pivote dans sa position désengagée de l'évidemment (30b).

5. Console selon la revendication précédente, **caractérisé en ce que** la patte d'accroche (28/b) comprend des moyens de rappel (37b) dans sa position de verrouillage engagée dans l'évidemment (30b).

6. Console selon l'une quelconque des revendications 3 à 5, **caractérisé en ce qu'**elle comporte deux pattes d'accroche (28a,28b) se faisant face transversalement de part et d'autre de l'espace de rangement (4) de la partie de support (2) de l'accoudoir (6) et montée chacun à proximité d'une paroi longitudinale (3a,3b) de la partie de support (2), leur axe de rotation (R) étant monté dans l'accoudoir (6), chaque patte d'accroche (28a,28b) présentant une tête (32b) dotée d'une fiche (33b) faisant saillie transversalement vers la paroi longitudinale opposée (3b,3a) et une partie inférieure (34b) dotée d'un crochet (35b) dirigé vers la paroi longitudinale (3a,3b) de montage de la patte d'accroche concernée (28a,28b), le crochet (35b) étant engagée, lorsque la patte d'accroche concernée (28a,28b) est en position de verrouillage, dans un évidemment de verrouillage correspondant (30b) ménagé sur la paroi interne (31b) de la dite paroi longitudinale (3b), et **en ce que** deux organes d'entraînement (38b) chacun solidarisé au système de maintien d'objets (10) en s'étendant vers la partie arrière de l'accoudoir (6) jusqu'à une partie d'extrémité (39b) dont la face supérieure est située à une hauteur autorisant le soulèvement de la fiche (33b) de la patte d'accroche concernée (28a,28b) lorsque l'organe d'entraînement (38b) s'engage sous la fiche (33b) à l'arrivée du système de maintien d'objets (10) dans sa position rangée dans l'accoudoir (6), le soulèvement de chaque fiche (33b) entraînant concomitamment les pattes d'accroche (28a,28b) en pivotement vers leur position désengagée de l'évidemment correspondant (30b).

7. Console selon l'une quelconque des revendications précédentes, **caractérisée en ce que** l'accoudoir (6) comporte un couvercle (9) recouvrant le système de maintien d'objets (10) lorsque ce dernier est en position rangée dans l'accoudoir (6), le couvercle (9) comportant une face interne (44) dotée de deux bossages (42,43) espacés longitudinalement et qui coopèrent avec une patte souple (25) montée sur la face supérieure du système de maintien d'objets (10), le bossage (42) le plus proche de la partie arrière de l'accoudoir (6) comportant des moyens de retenus (42a) de la patte souple (25) vers l'avant lorsque ladite patte souple (25) est maintenue au niveau de la partie arrière du bossage (42), position dans laquelle le système de maintien d'objets (10) est en position rangée dans l'accoudoir (6), et le bossage le plus proche de la partie d'extrémité avant (43) de l'accoudoir (6) comportant des moyens de retenus (43a) de la patte souple (25) vers l'arrière lorsque ladite patte souple (25) est maintenue en niveau de la partie avant dudit bossage (43), position dans laquelle le système de maintien d'objets (10) est en position déployée de blocage.

8. Console selon l'une quelconque des revendications précédentes, **caractérisé en ce que** la partie avant (12) du système de maintien d'objets (10) qui fait saillie de la partie d'extrémité avant de l'accoudoir (6) lorsque le système de maintien d'objets (10) est dans sa position déployée comporte au moins un porte-gobelet (14).

9. Console selon la revendication précédente, **caractérisé en ce que** le porte-gobelet (14) comprend un évidement traversant (43) réalisé dans l'épaisseur de ladite partie avant (12) du système de maintien d'objets (10), et un bras articulé (48) entre une position rangée autorisant le coulissement du système de maintien d'objets (10) dans l'accoudoir (6) et une position déployée dans laquelle il forme fond (50) au moins partiel de réception d'un gobelet.

10. Véhicule automobile, **caractérisé en ce qu'**il comporte une console centrale (1) selon l'une quelconque des revendications précédentes.
